# EUROPÄISCHE PATENTSCHRIFT

(11) **EP 3 638 148 B1**
(45) Veröffentlichungstag und Bekanntmachung des Hinweises auf die Patenterteilung: **02.08.2023**
(21) Anmeldenummer: 18732637.6
(22) Anmeldetag: 23.05.2018
(51) Int. Cl.: A61C 8/00, A61C 8/02

(54) **DENTALIMPLANTATSYSTEM UMFASSEND EIN ZAHNIMPLANTAT UND EIN SEPARATES ABUTMENT**
DENTAL IMPLANT SYSTEM COMPRISING A TOOTH IMPLANT AND A SEPARATE ABUTMENT
SYSTÈME D'IMPLANT DENTAIRE COMPRENANT UN IMPLANT DENTAIRE ET UN PILIER PROTHÉTIQUE SÉPARÉ

(30) Priorität: 14.06.2017 DE 102017005618
(43) Veröffentlichungstag der Anmeldung: 22.04.2020
(73) Patentinhaber: Scherer, Johannes, 86438 Kissing (DE)
(72) Erfinder: Scherer, Johannes, 86438 Kissing (DE)
(74) Vertreter: Wiedemann, Markus
(86) Internationale Anmeldenummer: PCT/DE2018/000155
(87) Internationale Veröffentlichungsnummer: WO 2018/228626

(56) Entgegenhaltungen:
- WO-A1-02/00133
- WO-A1-2015/118543
- CN-A- 104 263 996
- DE-A1-102015 100 117
- DE-U1-202010 015 755
- US-A1- 2013 233 456
- US-A1- 2017 067 136
- R.Z. VALIEV ET AL: "Nanostructured Titanium for Biomedical Applications", ADVANCED ENGINEERING MATERIALS., Bd. 10, Nr. 8, August 2008 (2008-08), Seiten B15-B17, XP055410357, DE ISSN: 1438-1656, DOI: 10.1002/adem.200800026
- REHAM OSMAN ET AL: "A Critical Review of Dental Implant Materials with an Emphasis on Titanium versus Zirconia", MATERIALS, Bd. 8, Nr. 3, 5. März 2015 (2015-03-05), Seiten 932-958, XP055493026, DOI: 10.3390/ma8030932
- MITSUO NIINOMI ET AL: "Biomedical titanium alloys with Young's moduli close to that of cortical bone", REGENERATIVE BIOMATERIALS, Bd. 3, Nr. 3, 8. März 2016 (2016-03-08), Seiten 173-185, XP055493116, ISSN: 2056-3418, DOI: 10.1093/rb/rbw016

## Beschreibung

Die vorliegende Erfindung betrifft ein Dentalimplantatsystem umfassend ein separates Abutment sowie zum Austausch des Abutments ein Austausch-Abutment gemäß dem Oberbegriff von Anspruch 1.

Bei der Versorgung von Patienten mit Implantaten zum Bereitstellen einer Dentalprothetik bzw. eines Zahnersatzes kann es dazu kommen, dass bereits eingesetzte Zahnimplantate wieder aus dem Kieferknochen des Patienten entfernt werden müssen. Die Hauptursachen für solche Verluste sind Entzündungen um das Zahnimplantat herum (sogenannte Periimplantitis) sowie Frakturen des Zahnimplantats, des Abutments oder von Befestigungsschrauben.

Eine Periimplantitis ist gekennzeichnet durch eine Entzündung des Weichgewebes verbunden mit einem Knochenrückgang um das Zahnimplantat. Dies führt zu einem Freiliegen der Zahnimplantatoberfläche. Üblicherweise weist die Zahnimplantatoberfläche eine gewisse Rauigkeit auf, die mithilfe spezieller Behandlungsverfahren hergestellt wird, beispielsweise mit Sandstrahlen oder Säureätzen. Diese rauhe behandelte Zahnimplantatoberfläche dient der besseren Knochenanlagerung und Knochenintegration (Osseointegration). Infolge eines Freiliegens der Zahnimplantatoberfläche im Mundraum des Patienten steigt die Anfälligkeit für eine Bakterienbesiedlung der Zahnimplantatoberfläche. Dies kann letztendlich dazu führen, dass das eingesetzte Zahnimplantat wieder entfernt werden muss, da bisher kein Verfahren bekannt ist, eine einmal mit Bakterien infizierte Zahnimplantatoberfläche wieder sicher keim- bzw. bakterienfrei zu bekommen.

Die Ursachen für die Entwicklung einer Periimplantitis sind vielfältig: Beim Befestigen von Zahnersatz auf Zahnimplantaten wird häufig eine Form von Zement zwischen der Zahnprothetik und dem Abutment verwendet. Eine vollständige Entfernung von Zementüberschüssen ist oft nicht möglich. Verbleibende Zementreste am Zahnimplantat und/oder Zahnersatz können Auslöser einer Periimplantitis sein.

Ferner kann es aufgrund eines Knochenrückgangs zu einer Periimplantitis kommen, da der Knochenrückgang zu einem Freiliegen der aufgerauten Zahnimplantatoberfläche führen kann. Diese kann dann von Bakterien besiedelt werden. Die Bakterienkontamination kann der Auslöser einer Periimplantitis sein.

Ursachen für einen Knochenrückgang an der Zahnimplantatoberfläche sind eine Überbelastung des Knochens bei der Operation bzw. der Zahnimplantatinsertion und/oder eine zu dünne Knochenüberdeckung, da der Knochen unter einer gewissen Knochenstärke mit Rückgang reagieren kann. Weitere Ursachen für einen Knochenrückgang und damit für eine Periimplantitis können Spannungen im Implantat sein, die auf den Knochen übertragen werden und zu einer Überbelastung des Knochens während der Einheilung des Zahnimplantats (Einheilphase) oder während der Anbringung des Zahnersatzes (prothetische Phase) führen können.

Nicht nur eine Bakterienbesiedlung der Knochenanlagerung dienenden Zahnimplantatoberfläche, sondern auch eine Bakterienbesiedlung der Implantat-Abutment-Verbindung kann eine Periimplantitis zur Folge haben.

Ein Dentalimplantatsystem ist aus DE 10 2015 100 117 A1 bekannt. Dort wird ein Ersatzring zum Ersetzen eines subtraktiv entfernbaren ringförmigen Materialbereichs in einem koronalen Bereich eines Insertionsabschnitts eines Zahnimplantats vorgeschlagen, um eine mit Bakterien infizierte Zahnimplantatoberfläche subtraktiv zu entfernen und durch die unkontaminierte Außenfläche des Ersatzrings zu ersetzen. Ein weiteres Dentalimplantatsystem wird in WO 2015/118543 A1 beschrieben. Dort kontaktieren Abutments verschiedener Länge das Zahnimplantat entlang einer externen Verbindungsplattform des Zahnimplantats.

Ein gattungsgemäßes Dentalimplantatsystem wird in DE 20 2010 015 755 U1 offenbart. Dort besteht das Dentalimplantatsystem aus mindestens einem Implantat und mindestens zwei Abutments, wobei die Abutments unterschiedlich ausgestaltete Ausnehmungen aufweisen, in welche das Implantat hineinragt. Weil diese Ausnehmungen bei den Abutments unterschiedlich gestaltet sind, können die Abutments in unterschiedlichen Höhen auf dem Implantat aufsitzen. Dadurch kann das Implantatsystem an unterschiedliche Schleimhauthöhen angepasst werden. Nachteilig hierbei ist jedoch, dass dann auch unterschiedlich lange Zahnkronen für die Abutments hergestellt werden müssen, damit das Zahnimplantat an eine bestehende Zahnlinie eingereiht werden kann.

Die Aufgabe der Erfindung besteht darin, ein Dentalimplantatsystem derart weiter zu bilden, dass es bei hoher Flexibilität besser in eine bestehende Zahnlinie integriert werden kann.

Diese Aufgabe wird erfindungsgemäß durch die Merkmale von Anspruch 1 gelöst. Vorteilhafte Weiterbildungen der Erfindung sind Gegenstand der jeweils beigefügten Unteransprüche.

### Offenbarung der Erfindung

Die Erfindung schlägt ein Dentalimplantatsystem gemäß Anspruch 1 vor. Das Dentalimplantatsystem umfasst ein separates Abutment, sowie ein Zahnimplantat, an welchem das Abutment insbesondere mit einer Befestigungsschraube befestigbar oder befestigt ist. Das Zahnimplantat umfasst einen Insertionsabschnitt zur Verankerung in einem Kieferknochen, welcher mit einem Schraubgewinde oder Schlaggewinde versehen ist, einen sich koronal an den Insertionsabschnitt anschließenden Multifunktionsabschnitt, welcher einen ersten, sich koronal verjüngenden Konus aufweist, sowie einen sich koronal an den Multifunktionsabschnitt anschließenden Befestigungsabschnitt, welcher einen sich koronal verjüngenden und an den ersten Konus unmittelbar anschließenden zweiten Konus aufweist, welcher als koronaler Vorsprung ausgebildet ist, wobei wenigstens zwischen dem zweiten Konus und dem Abutment eine externe Konusverbindung vorgesehen ist. Der erste Konus und der zweite Konus weisen denselben Konuswinkel und eine gemeinsame glatte Mantelfläche auf. Mit anderen Worten geht der erste Konus unmittelbar in den zweiten Konus stetig und ohne Absatz sowie ohne Änderung des Konuswinkels über.

Von der koronalen Seite des Zahnimplantats her gesehen bildet dann der erste Konus eine Verlängerung des zweiten Konus, welcher den Sitz des Abutments bildet, so dass es zum einen möglich ist, ein ursprünglich verwendetes Abutment gegen ein Austausch-Abutment mit größerer axialer Länge zu verwenden, welches dann nicht nur auf dem zweiten Konus sondern auch (wenigstens teilweise) auf dem ersten Konus sitzt. Mit einem solchen längeren Austausch-Abutment kann auf einen Zahnfleischrückgang und ein eventuelles Freiliegen des Zahnimplantats reagiert werden. Bei zu erwartenden höheren Kaubelastungen kann durch die dann axial längere Verbindungsfläche zwischen dem Zahnimplantat und dem Austausch-Abutment eine höhere mechanische Stabilität erreicht werden. Im Falle einer Periimplantitis braucht man lediglich die kontaminierte Oberfläche im Bereich des zweiten Konus zu entfernen. Durch die konische Form des zweiten Konus kann dies mit einer Fräse auf besonders einfache Weise bewerkstelligt werden. Da nanostrukturiertes Titan oder eine nanostrukturierte Titanlegierung keine Oberflächenbeschichtung zur Osseointegration benötigt, ist nach Entfernung des oberflächlichen korrodierten oder kontaminierten Materials eine Augmentation und erneute Osseointegration möglich.

Andererseits kann auch der Insertionsabschnitt des Zahnimplantats so tief in den Kieferknochen eingeschraubt werden, dass sich zumindest ein Teil des ersten Konus unterhalb der Knochenlinie befindet, was die Flexibilität des Zahnimplantats im Hinblick auf dessen Einschraubtiefe vorteilhaft erhöht. Denn bei konventionellen Zahnimplantaten muss deren rauhe Oberfläche stets von Knochen bedeckt sein. Dies kann aber nicht immer sichergestellt werden, da der Knochen oftmals schräg zur Zahnimplantatachse verläuft. Es muss demgegenüber lediglich sichergestellt sein, dass der Insertionsabschnitt von Knochen bedeckt ist.

Folglich stellt der Multifunktionsabschnitt, der den ersten Konus enthält oder durch den ersten Konus gebildet wird, mehrere Funktionen zur Verfügung, indem er nämlich einerseits die oben beschriebene Verwendung eines längeren Ersatz-Abutments und andererseits ein flexibles Inserieren des Zahnimplantats ermöglicht, je nachdem, ob der erste Konus des Multifunktionsabschnitts wenigstens teilweise ein längeres Ersatz-Abutments lagert oder in den Kieferknochen zumindest ein Stück weit hineinragt.

Vorzugsweise sind der erste Konus und/oder der zweite Konus ohne ein äußeres Schraubgewinde oder Schlaggewinde ausgeführt, wodurch das Zahnimplantat ausschließlich an dem Insertionsabschnitt über ein Schraubgewinde oder über ein Schlaggewinde zum Einschrauben oder Einschlagen in den Kieferknochen verfügt.

Daher ist zum Austausch des Abutments ein in axialer Richtung gesehen längeres Austausch-Abutment vorgesehen, welches sich in axialer Richtung einer Zahnimplantatachse gesehen apikal über den zweiten Konus hinaus bis in den ersten Konus hinein erstreckt.

Weiterhin kontaktiert das Austausch-Abutment über wenigstens einen Teil der axialen Erstreckung des zweiten Konus und zusätzlich über wenigstens einen Teil der axialen Erstreckung des ersten Konus das Zahnimplantat, so dass aufgrund der insbesondere von einer Befestigungsschraube ausgeübten Spannkräfte und der dann größeren Kontaktfläche zwischen dem Austausch-Abutment und dem Zahnimplantat eine steifere Verbindung zwischen diesen Elementen ergibt.

Gemäß einer Weiterbildung kann sich der Insertionsabschnitt zum apikalen Ende des Zahnimplantats hin konisch verjüngen.

Unter einem Abutment wird allgemein das Verbindungsteil (Mesostruktur) zwischen dem Zahnimplantat und der prothetischen Versorgung, d.h. der sichtbaren Zahnkrone bezeichnet. Das Abutment wird dabei mit Hilfe der Befestigungsschraube an dem Zahnimplantat befestigt, beispielsweise, indem ein Schraubenschaft der Befestigungsschraube in eine mit einem Innengewinde versehene zentrale Öffnung im Zahnimplantat einschraubbar ist bzw. eingeschraubt wird.

Herkömmliche Zahnimplantate werden aus cP Titan (commercially pure titanium) gefertigt. Dieses Material hat einen E-Modul von ca. 105 GPa. Im Vergleich dazu hat der Kieferknochen einen E-Modul von 1-30 GPa. Durch die stark unterschiedlichen E-Module kommt es zu einer ungleichen Lastverteilung innerhalb des Knochens, die stellenweise zu einer Überbelastung und einem damit verbundenen Knochenrückgang und stellenweise auch zu einer Unterbelastung (Stress Shielding) und aufgrund der ungleich verteilten Belastungen zu einem Knochenrückgang führen kann.

Im Stand der Technik war man deshalb versucht, für das Zahnimplantat ein Material mit einem dem Knochen ähnlichen E-Modul auszuwählen. Beispielsweise aus US5573401A ist ein Zahnimplantat aus einer Titanlegierung Ti-Nb-Zr mit relativ niedrigem E-Modul bekannt. Dies führt zwar einerseits zu einer besseren Lastverteilung im Knochen, andererseits jedoch zu einer höheren Belastung der auf das Zahnimplantat aufgesetzten Zahnprothetik und kann deshalb zu einem Verlust der Zahnprothetik führen.

Das Zahnimplantat kann demgegenüber aus einem ersten Material bestehen, welches einen E-Modul (Elastizitätsmodul) zwischen 15 GPa und 75 GPa aufweist und dass das Abutment aus einem zweiten Material besteht, welches einen E-Modul (Elastizitätsmodul) größer als 100 GPa aufweist, wobei die Befestigungsschraube aus dem ersten Material oder aus dem zweiten Material besteht.

Der Begriff Material umfasst reine Materialien oder auch Legierungen, welche aus verschiedenen Legierungsbestandteilen bestehen wie beispielsweise Titanlegierungen.

Dadurch kann der effektive E-Modul (Elastizitätsmodul) des Dentalimplantatsystems im Bereich der Befestigungsschraube bedarfsweise angepasst werden. Durch die Verwendung des zweiten Materials für das Abutment, das im Vergleich zum ersten Material des Zahnimplantats einen größeren E-Modul aufweist, ergibt sich für die Paarung Implantat/Befestigungsschraube im Bereich des Zahnimplantats der mit der Befestigungsschraube durchsetzt ist, ein höherer relativer E-Modul. Durch Auswahl des Materials der Befestigungsschraube innerhalb des ersten Materials oder des zweiten Materials und der Länge der Befestigungsschraube kann der E-Modul dann optimal an jeweils vorliegende Bedürfnisse angepasst werden.

Für das Zahnimplantat, welches mit einem Insertionsabschnitt in den Kieferknochen eingesetzt ist, bietet das erste Material einen relativ niedrigeren, an den Knochen angepassten E-Modul. Der E-Modul des Abutments ist demgegenüber wesentlich höher. Unter Kaubelastung überträgt das Zahnimplantat die größten Lasten auf den crestalen Knochen. Durch eine Anpassung der Länge der Befestigungsschraube in Abhängigkeit von der Geometrie des Zahnimplantats kann die Lastübertagung auf den crestalen Knochen reduziert werden.

Besonders vorteilhaft ist als erstes Material für das Zahnimplantat 1 eine Beta-Titanlegierung und als zweites Material für das Abutement 2 cP-Titan (commerially pure titanium) vorgesehen.

Weiterhin besonders vorteilhaft sind gemäß einer Weiterbildung das erste Material und/oder das zweite Material nanostrukturiert. Nanostrukturiertes Material weist eine innere Struktur oder Oberflächenstruktur im Nanometermaßstab (z.B. Nano-Komposite) auf. Eine solche Nanostrukturierung erhöht die Festigkeit und insbesondere die Dauerfestigkeit, so dass die Baugröße des Zahnimplantats und/oder des Abutments auch verkleinert werden kann.

Darüber hinaus verfügen nanostrukturiertes Titan oder nanostrukturierte Titanlegierungen im Vergleich zu nicht-nanostrukturierten Materialen über eine deutlich höhere Osteointegrationsfähigkeit. Zahnimplantate aus nanostrukturiertem Material benötigen deshalb keine Oberflächenbeschichtung oder Oberflächenbearbeitung. Dadurch wird eine ganz besonders vorteilhafte und im Rahmen der Erfindung weiter unten beschriebene Ausgestaltung des Zahnimplantats möglich.

Gemäß einer Weiterbildung kann das Zahnimplantat einen ein Schraubgewinde oder ein Schlaggewinde aufweisenden Insertionsabschnitt zur Verankerung des Zahnimplantats in einem Kieferknochen und einen koronalen Vorsprung für eine externe Verbindung des Zahnimplantats mit dem Abutment oder eine interne Ausnehmung für eine interne Verbindung des Zahnimplantats mit dem Abutment aufweisen, wobei das Abutment an dem Zahnimplantat durch die externe Verbindung oder durch die interne Verbindung befestigbar oder befestigt ist.

Dabei kann die Befestigungsschraube bei einer externen Verbindung zwischen dem Abutment und Zahnimplantat in eine in dem koronalen Vorsprung ausgebildete Öffnung, oder bei einer internen Verbindung zwischen dem Abutment und Zahnimplantat in eine in der Ausnehmung ausgebildete Öffnung einschraubbar oder eingeschraubt sein.

Auch kann vorgesehen sein, dass zumindest das Zahnimplantat zumindest an seiner Oberfläche aus Titan oder aus einer Titanlegierung besteht, welche nanostrukturiert ist.

Zumindest an seiner Oberfläche aus Titan oder aus einer Titanlegierung bestehend, welche nanostrukturiert ist, bedeutet, dass wenigstens die nach außen weisende Oberfläche des Zahnimplantats aber auch weiter innen liegende Bereiche des Zahnimplantats oder aber auch das gesamte Zahnimplantat aus Titan oder aus einer Titanlegierung bestehen können, welche nanostrukturiert ist.

Gemäß einer Weiterbildung kann auch das Abutment aus Titan oder aus einer Titanlegierung besteht, welche nanostrukturiert ist.

Wie zu einer Weiterbildung oben ausgeführt, erhöht eine solche Nanostrukturierung die Festigkeit und insbesondere die Dauerfestigkeit, so dass die auch Baugröße des Zahnimplantats und/auch des Abutments verkleinert werden kann. Nanostrukturiertes Titan oder eine nanostrukturierte Titanlegierung hat im Vergleich zu nicht-nanostrukturierten Materialen eine deutlich erhöhte Osteointegrationsfähigkeit. Zahnimplantate aus nanostrukturiertem Material benötigen deshalb keine Oberflächenbeschichtung oder Oberflächenbearbeitung. Dadurch wird eine ganz besonders vorteilhafte weiter unten beschriebene Gestaltung ermöglicht.

### Zeichnung

Die Erfindung wird nachstehend anhand eines Ausführungsbeispiels unter Bezugnahme auf die beigefügte Zeichnung näher beschrieben. Es zeigen:
- Fig. 1: eine Seitenansicht eines Dentalimplantatsystems gemäß einer bevorzugten Ausführungsform der Erfindung mit einem Zahnimplantat, einer Befestigungsschraube und einem Abutment;
- Fig.2: einen Längsschnitt durch das Dentalimplantatsystem entlang der Linie II-II von Fig.1;
- Fig. 3: eine Einzelquerschnittsdarstellung des Abutments des Dentalimplantatsystems von Fig.1;
- Fig.4: eine Einzelquerschnittsdarstellung des Zahnimplantats des Dentalimplantatsystems von Fig.1.

### Beschreibung des Ausführungsbeispiels

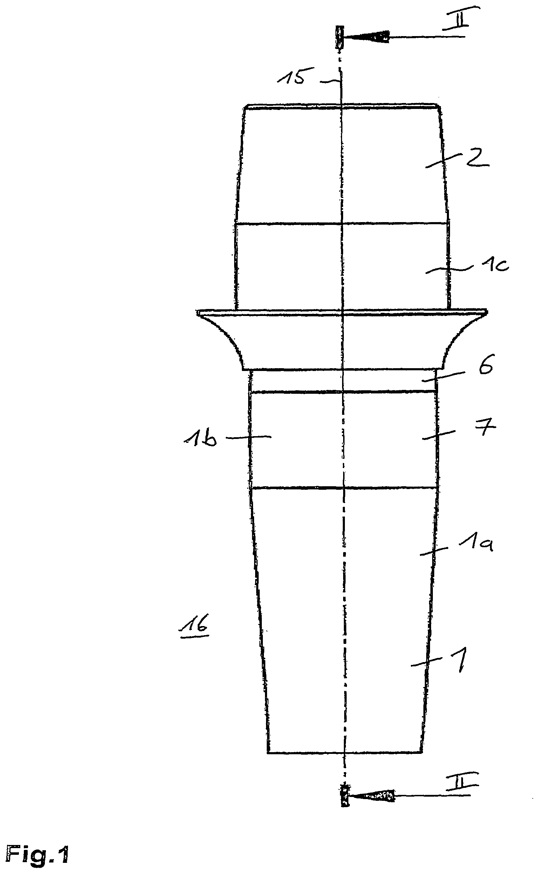

Das in **Fig.1** gezeigte Dentalimplantatsystem umfasst ein Zahnimplantat 1, ein separates Abutment 2, sowie eine Befestigungsschraube 3, mit welcher das Abutment 2 an dem Zahnimplantat 1 befestigt ist.

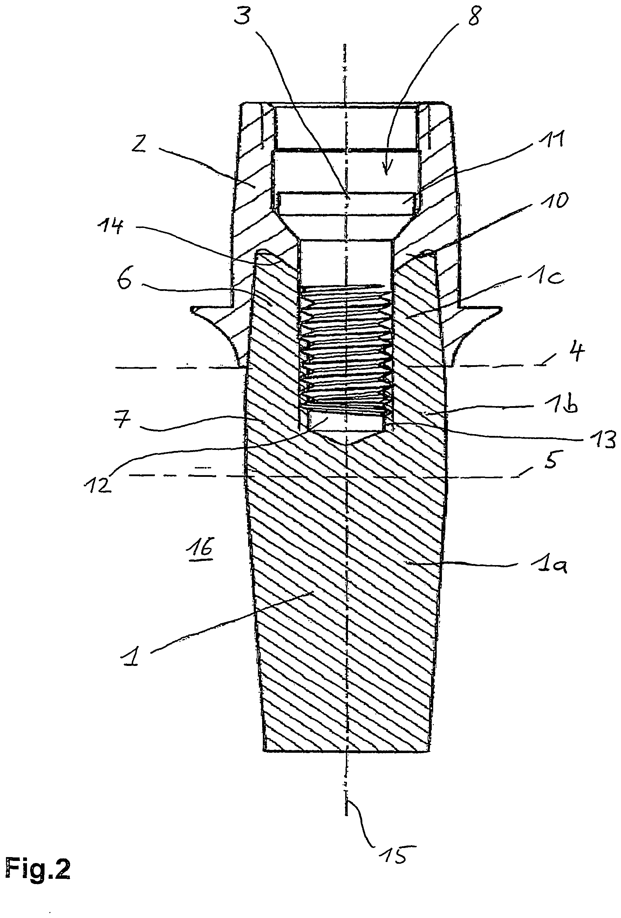

Wie am besten anhand von **Fig.2** veranschaulicht wird, umfasst das Zahnimplantat 1 einen Insertionsabschnitt 1a zur Verankerung des Zahnimplantats 1 in einem Kieferknochen, welcher mit einem Schraubgewinde oder Schlaggewinde versehen ist, einen sich koronal an den Insertionsabschnitt 1a anschließenden Multifunktionsabschnitt 1b sowie einen sich koronal an den Multifunktionsabschnitt 1b anschließenden Befestigungsabschnitt 1c.

Der Multifunktionsabschnitt 1b weist einen ersten sich ausgehend vom Ende des Insertionsabschnitts 1a koronal verjüngenden Konus 7 auf während der Befestigungsabschnitt 1c einen sich koronal verjüngenden und an den ersten Konus 7 unmittelbar anschließenden zweiten Konus 6 aufweist, welcher einen koronalen Vorsprung des Zahnimplantats 1 ausbildet.

Wenigstens zwischen dem zweiten Konus 6 und dem Abutment 2 ist eine externe Konusverbindung vorgesehen. Dazu weist eine innere Durchgangsöffnung 8 des Abutments 2 einen inneren Konus 9 auf, welcher hinsichtlich des Konuswinkels komplementär zu dem zweiten Konus 6 des Zahnimplantats 1 ausgebildet ist. Der innere Konus 9 ist dann an dem apikalen Ende des Abutments 2 angeordnet, damit das Abument 2 von der koronalen Seite her auf den zweiten Konus 6 aufgesetzt werden kann.

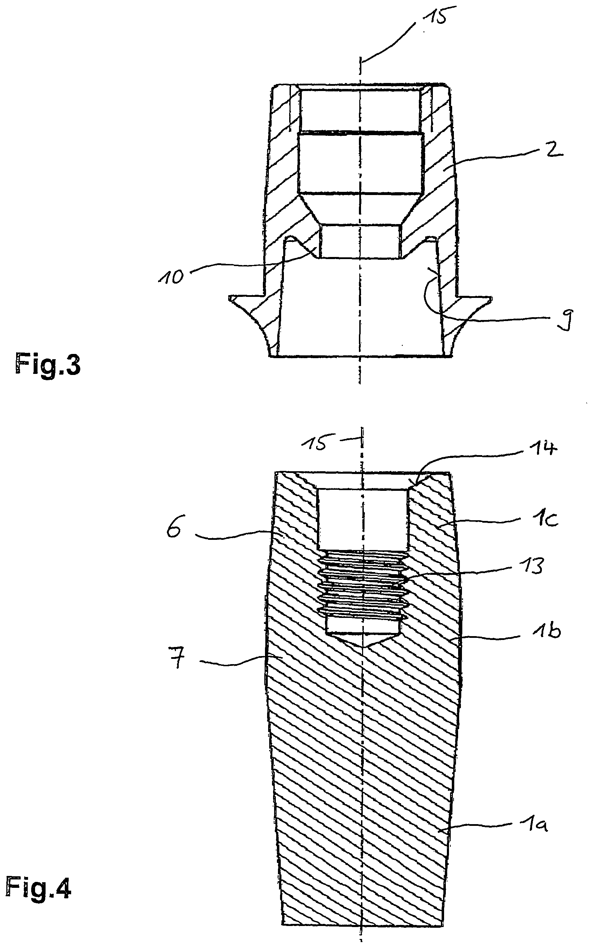

Wie insbesondere **Fig.3** veranschaulicht, weist die Durchgangsöffnung 8 des Abutments 2 an dem koronalen Ende des inneren Konus 9 einen beispielsweise sich in apikaler Richtung im Querschnitt schräg oder geneigt erstreckenden Kragen 10 auf **(****Fig.3****),** welcher komplementär zu einer koronalen ringförmigen Randfläche 14 einer zentralen Gewindesacklochbohrung 13 in dem Zahmimplantat 1 ausgebildet ist **(****Fig.2** und **Fig.4****).** Wenn daher das Abutment 2 mit dem inneren Kragen 10 auf den zweiten Konus 6 des Zahnimplantats aufgesetzt wird **(****Fig.2****),** dann ensteht zwischen diesem Kragen 10 und der ringförmigen Randfläche 14 ein zentrierender Formschluss.

An dem Kragen 10 ist dann auf der von der Randfläche 14 weg weisenden Seite ein Schraubenkopf 11 der Befestigungschraube 3 gekontert, deren Schraubenschaft 12 in die Gewindesacklochbohrung 13 des Zahnimplantats 1 eingeschraubt ist, um das Abutment 2 an dem Zahnimplantat 1 in der zentrierten Lage zu fixieren.

Bei der hier gezeigten Ausführungsform erstreckt sich ein apikales Ende des Abuments 2 in Richtung der Zahnimplantatachse 15 gesehen bis zu einem in **Fig.2** mit der Bezugszahl 4 gekennzeichneten Niveau am Zahnimplantat 1 bezogen auf die in Axialrichtung verlaufende Zahnimplantatachse 15. Andererseits ist der Insertionsabschnitt 1a bis zu einem in **Fig.2** mit der Bezugszahl 5 gekennzeichneten Niveau am Zahnimplantat 1 in den Kieferknochen 16 eingeschraubt, wobei das Niveau 5 wiederum auf die in Axialrichtung verlaufende Zahnimplantatachse 15 bezogen ist. Zwischen dem Niveau 5 und dem Niveau 4 erstreckt sich dann in Richtung der Zahnimplantatachse 15 gesehen bevorzugt der erste Konus 7 des Multifunktionsabschnitts 1b.

Der erste Konus 7 und der zweite Konus 6 weisen denselben Konuswinkel und eine gemeinsame glatte Mantelfläche auf. Mit anderen Worten geht der erste Konus 7 unmittelbar in den zweiten Konus 6 stetig und ohne Absatz sowie ohne Änderung des Konuswinkels über. Somit bildet der zweite Konus 6 eine direkte Fortsetzung des ersten Konus 7.

Von der koronalen Seite des Zahnimplantats 1 her gesehen bildet dann der erste Konus 7 eine Verlängerung des zweiten Konus 6, welcher einen zentrierenden Sitz für das Abutments 2 bildet, so dass es zum einen möglich ist, das ursprünglich verwendete Abutment 2 gegen ein Austausch-Abutment mit größerer axialer Länge zu verwenden. Beispielsweise kann sich dann wegen des stetigen und glatten Übergangs des zweiten Konus 6 in den ersten Konus 7 das apikale Ende eines solchen Austausch-Abutments in Richtung der Zahnimplantatachse 15 gesehen theoretisch bis hin zum Niveau 5 in **Fig.2** erstrecken, an welchem der Insertionsabschnitt 1a beginnt.

Mit einem solchen längeren Austausch-Abutment kann auf einen Zahnfleischrückgang und ein eventuelles Freiliegen des Zahnimplantats reagiert werden. Bei zu erwartenden höheren Kaubelastungen kann durch die dann axial längere Verbindungsfläche zwischen dem Zahnimplantat 1 und dem Austausch-Abutment eine höhere mechanische Stabilität erreicht werden. Im Falle einer Periimplantitis müsste man dann lediglich die kontaminierte Oberfläche im Bereich des zweiten Konus 6 entfernen.

Andererseits kann dann auch der Insertionsabschnitt 1a des Zahnimplantats 1 tiefer in den Kieferknochen eingeschraubt werden, beispielsweise sogar soweit, dass der Kieferknochenkamm des Kieferknochens das Niveau 4 in **Fig.2** erreicht, auf welchem das apikale Ende des Abutments 2 angeordnet ist. Dann befindet sich zumindest ein Teil des ersten Konus 7 unterhalb der Knochenlinie, was die Flexibilität hinsichtlich der Einschraubtiefe des Zahnimplantats 1 in den Kieferknochen vorteilhaft erhöht. Es muss dabei lediglich sichergestellt sein, dass der Insertionsabschnitt 1a von Knochen bedeckt ist.

Folglich stellt der Multifunktionsabschnitt 1b, der den ersten Konus 7 enthält oder durch den ersten Konus 7 gebildet wird, wie der Begriff bereits ausdrückt mehrere Funktionen zur Verfügung, indem er nämlich einerseits einen Ersatz eines Abutmets 2 durch ein demgegenüber längeres Ersatz-Abutments und andererseits ein flexibles Inserieren des Zahnimplantats 1 in den Kieferknochen ermöglicht.

Weiterhin besteht das Zahnimplantat 1 aus einem ersten Material, welches einen E-Modul (Elastizitätsmodul) zwischen 15 GPa und 75 GPa aufweist. Das Abutment besteht demgegenüber aus einem zweiten Material, welches einen E-Modul (Elastizitätsmodul) größer als 100 GPa aufweist. Die Befestigungsschraube 3 kann aus dem ersten Material oder aus dem zweiten Material bestehen.

Der Begriff Material umfasst reine Materialien oder auch Legierungen, welche aus verschiedenen Legierungsbestandteilen bestehen wie beispielsweise Titanlegierungen.

Dadurch kann der effektive E-Modul (Elastizitätsmodul) des Dentalimplantatsystems im Bereich der Befestigungsschraube 3 bedarfsweise angepasst werden. Durch die Verwendung des zweiten Materials für das Abutment 2, das im Vergleich zum ersten Material des Zahnimplantats 1 einen größeren E-Modul aufweist, ergibt sich für die Paarung Zahnimplantat/Befestigungsschraube im Bereich der Gewindesacklochbohrung 13 des Zahnimplantats 1, der mit der Befestigungsschraube 3 durchsetzt ist, ein höherer relativer E-Modul. Durch Auswahl des Materials der Befestigungsschraube 3 innerhalb des ersten Materials oder des zweiten Materials und der Länge der Befestigungsschraube 3 kann dann der E-Modul dann optimal an Bedürfnisse angepasst werden.

Im Bereich des Kieferknochens, d.h. innerhalb des Insertionsabschnitts 1a des Zahnimplantats 1 ist der E-Modul des ersten Materials vorteilhaft niedrig. Im Bereich des Abutments 2 ist der E-Modul demgegenüber höher. Unter Kaubelastung überträgt das Zahnimplantat 1 die größten Lasten auf den crestalen Knochen. Durch eine Anpassung der Länge der Befestigungsschraube 3 in Abhängigkeit von der Geometrie des Zahnimplantats 1 kann dann die Lastübertagung auf den crestalen Knochen reduziert werden.

Besonders vorteilhaft ist als erstes Material für das Zahnimplantat 1 eine Beta-Titanlegierung und als zweites Material für das Abutement 2 cP-Titan (commerially pure titanium) vorgesehen.

Weiterhin sind das erste Material und/oder das zweite Material nanostrukturiert. Nanostrukturiertes Material weist eine innere Struktur oder Oberflächenstruktur im Nanometermaßstab (z.B. Nano-Komposite) auf. Eine solche Nanostrukturierung erhöht die Festigkeit und insbesondere die Dauerfestigkeit, so dass die Baugröße der Zahnimplantate vorteilhaft verkleinert werden kann.

Nanostrukturiertes Titan oder eine nanostrukturierte Titanlegierung hat im Vergleich zu nicht-nanostrukturierten Materialen eine deutlich erhöhte Osteointegrationsfähigkeit. Zahnimplantate aus nanostrukturiertem Material benötigen deshalb keine Oberflächenbeschichtung oder Oberflächenbearbeitung. Dadurch wird auch die oben beschriebene vorteilhafte Ausgestaltung des Zahnimplantats 1 mit dem ersten Konus 7 und dem zweiten Konus 6 ermöglicht.

### Bezugszeichenliste

- 1: Implantat
- 1a: Insertionsabschnitt
- 1b: Multifunktionsabschnitt
- 1c: Befestigungsabschnitt
- 2: Abutment
- 3: Befestigungsschraube
- 4: Niveau
- 5: Niveau
- 6: zweiter Konus
- 7: erster Konus
- 8: Durchgangsöffnung
- 9: Innerer Konus
- 10: Kragen
- 11: Schraubenkopf
- 12: Schraubenschaft
- 13: Gewindebohrung
- 14: Randfläche
- 15: Zahnimplantatachse
- 16: Kieferknochen

## Patentansprüche

1. Dentalimplantatsystem umfassend
- ein separates Abutment (2) und zum Austausch des Abutments (2) ein Austausch-Abutment, sowie
- ein Zahnimplantat (1), wobei an dem Zahnimplantat (1) das Abutment (2) befestigbar oder befestigt ist, mit
▪ einem Insertionsabschnitt (1a) zur Verankerung in einem Kieferknochen, welcher mit einem Schraubgewinde oder Schlaggewinde versehen ist, sowie mit
▪ einem sich koronal an den Insertionsabschnitt (1a) anschließenden Multifunktionsabschnitt (1b), welcher einen ersten, sich koronal verjüngenden Konus (7) aufweist, sowie mit
▪ einem sich koronal an den Multifunktionsabschnitt (1b) anschließenden Befestigungsabschnitt (1c), welcher einen sich koronal verjüngenden zweiten Konus (6) aufweist, welcher als koronaler Vorsprung ausgebildet ist, wobei
▪ der erste Konus (7) und der zweite Konus (6) denselben Konuswinkel und eine gemeinsame glatte Mantelfläche aufweisen, wobei
▪ zwischen dem zweiten Konus (6) und dem Abutment (2) eine externe Konusverbindung vorgesehen ist, wobei
▪ der zweite Konus (2) den Sitz des Abutments (2) bildet, von welchem sich ein apikales Ende in Richtung einer Zahnimplantatachse (15) gesehen bis zu einem ersten Niveau (4) am Zahnimplantat (1) erstreckt, wobei sich der erste Konus (7) zwischen dem ersten Niveau (4) und einem zweiten Niveau (5) am Zahnimplantat (1) erstreckt, welches auf die Zahnimplantatachse (15) bezogen ist und an welchem der Insertionsabschnitt (1a) beginnt, wobei
▪ das Austausch-Abutment sich in axialer Richtung der Zahnimplantatachse (15) gesehen apikal über den zweiten Konus (6) hinaus bis in den ersten Konus (7) hinein erstreckt, wobei das Austausch-Abutment über die axiale Erstreckung des zweiten Konus (6) und zusätzlich über wenigstens einen Teil der axialen Erstreckung des ersten Konus (7) das Zahnimplantat (1) kontaktiert, wobei sich das apikale Ende des Austausch-Abutments in Richtung der Zahnimplantatachse (15) gesehen sich bis zu dem zweiten Niveau (5) erstrecken kann,
**dadurch gekennzeichnet,**
**dass** das Austausch-Abutment in axialer Richtung gesehen länger ist als das Abutment (2).

2. Dentalimplantatsystem nach Anspruch 1, **dadurch gekennzeichnet, dass** der Insertionsabschnitt (1a) sich zum apikalen Ende des Zahnimplantats (1) hin konisch verjüngt.

3. Dentalimplantatsystem nach Anspruch 1 oder 2, **dadurch gekennzeichnet, dass** das Zahnimplantat (1) aus einem ersten Material besteht, welches einen Elastizitätsmodul zwischen 15 GPa und 75 GPa aufweist.

4. Dentalimplantatsystem nach Anspruch 3, **dadurch gekennzeichnet, dass** das Abutment (2) aus einem zweiten Material besteht, welches einen Elastizitätsmodul größer als 100 GPa aufweist.

5. Dentalimplantatsystem nach Anspruch 4, **dadurch gekennzeichnet, dass** das Abutment (2) aus cP-Titan besteht.

6. Dentalimplantatsystem nach Anspruch 5, **dadurch gekennzeichnet, dass** das cP-Titan nanostrukturiert ist.

7. Dentalimplantatsystem nach einem der vorhergehenden Ansprüche, **dadurch gekennzeichnet, dass** das Abutment (2) an dem Zahnimplantat (1) durch eine Befestigungsschraube (3) befestigbar oder befestigt ist.

8. Dentalimplantatsystem nach Anspruch 7 und nach den Ansprüchen 3 und 4, **dadurch gekennzeichnet, dass** die Befestigungsschraube (3) aus dem ersten Material oder aus dem zweiten Material besteht.

9. Dentalimplantatsystem nach einem der vorhergehenden Ansprüche **dadurch gekennzeichnet, dass** das Zahnimplantat (1) zumindest an seiner Oberfläche aus Titan oder aus einer Titanlegierung besteht, welche nanostrukturiert ist.

10. Dentalimplantatsystem nach einem der vorhergehenden Ansprüche, **dadurch gekennzeichnet, dass** das Abutment (2) aus Titan oder einer Titanlegierung besteht, welche nanostrukturiert ist.

## Claims

1. Dental implant system comprising
- a separate abutment (2) and, for replacing the abutment (2), a replacement abutment, and
- a tooth implant (1), wherein the abutment (2) is attachable or attached to the tooth implant (1), having
- an insertion section (1a) which is configured for anchoring in a jawbone and is provided with a screw thread or nail thread, and having
- a multifunctional section (1b) which adjoins the insertion section (1a) in the coronal direction and which has a first cone (7) which tapers in the coronal direction, and having
- an attachment section (1c) which adjoins the multifunctional section (1b) in the coronal direction and which has a second cone (6) which tapers in the coronal direction and is formed as a coronal projection, wherein
- the first cone (7) and the second cone (6) have the same cone angle and a common smooth lateral surface, wherein
- an external cone connection is provided between the second cone (6) and the abutment (2), wherein
- the second cone (2) forms the seat of the abutment (2), from which an apical end, as seen in the direction of a dental implant axis (15), extends to a first level (4) on the dental implant (1), wherein the first cone (7) extends between the first level (4) and a second level (5) on the dental implant (1), which level is related to the dental implant axis (15) and at which the insertion section (1a) begins,
wherein
- the replacement abutment extends apically beyond the second cone (6) into the first cone (7) as seen in the axial direction of the dental implant axis (15), wherein the replacement abutment contacts the dental implant (1) over the axial extension of the second cone (6) and additionally over at least a portion of the axial extension of the first cone (7), wherein the apical end of the replacement abutment, as seen in the direction of the dental implant axis (15), can extend up to the second level (5),
**characterised in that**
the replacement abutment is longer than the abutment (2) as seen in the axial direction.

2. Dental implant system according to claim 1, **characterised in that** the insertion section (1a) tapers conically towards the apical end of the dental implant (1).

3. Dental implant system according to claim 1 or 2, **characterised in that** the dental implant (1) consists of a first material which has a modulus of elasticity between 15 GPa and 75 GPa.

4. Dental implant system according to claim 3, **characterised in that** the abutment (2) consists of a second material which has a modulus of elasticity greater than 100 GPa.

5. Dental implant system according to claim 4, **characterised in that** the abutment (2) consists of cP titanium.

6. Dental implant system according to claim 5, **characterised in that** the cP titanium is nanostructured.

7. Dental implant system according to any one of the preceding claims, **characterised in that** the abutment (2) is attachable or attached to the dental implant (1) by an attachment screw (3).

8. Dental implant system according to claim 7 and according to claims 3 and 4, **characterised in that** the attachment screw (3) consists of the first material or of the second material.

9. Dental implant system according to any one of the preceding claims, **characterised in that** the dental implant (1) consists at least on its surface of titanium or of a titanium alloy which is nanostructured.

10. Dental implant system according to any one of the preceding claims, **characterised in that** the abutment (2) consists of titanium or a titanium alloy which is nanostructured.

## Revendications

1. Système d'implant dentaire comprenant
- un pilier prothétique séparé (2) et pour le remplacement du pilier prothétique (2) un pilier prothétique de remplacement, ainsi que
- un implant dentaire (1), dans lequel le pilier prothétique (2) est ou peut être fixé à l'implant dentaire (1), avec
- une section d'insertion (1a) pour l'ancrage dans une mâchoire qui est pourvue d'un filet de vis ou filet d'enfoncement, ainsi qu'avec
- une section multifonctions (1b) se raccordant en couronne à la section d'insertion (1a) qui présente un premier cône (7), se rétrécissant en couronne, ainsi qu'avec
- une section de fixation (1c) se raccordant en couronne à la section multifonctions (1b) qui présente un second cône (6) se rétrécissant en couronne qui est réalisé comme saillie en couronne, dans lequel
- le premier cône (7) et le second cône (6) présentent le même angle de cône et une surface enveloppe lisse commune, dans lequel
- une liaison de cône externe est prévue entre le second cône (6) et le pilier prothétique (2), dans lequel
- le second cône (2) forme le siège du pilier prothétique (2), duquel une extrémité apicale s'étend vu en direction d'un axe d'implant dentaire (15) jusqu'à un premier niveau (4) sur l'implant dentaire (1), dans lequel le premier cône (7) s'étend entre le premier niveau (4) et un second niveau (5) sur l'implant dentaire (1) qui est lié à l'axe d'implant dentaire (15) et au niveau duquel commence la section d'insertion (1a),
dans lequel
- le pilier prothétique de remplacement s'étend vu dans la direction axiale de l'axe d'implant dentaire (15) de manière apicale au-delà du second cône (6) jusque dans le premier cône (7), dans lequel le pilier prothétique de remplacement touche sur l'étendue axiale du second cône (6) et en outre sur au moins une partie de l'étendu axiale du premier cône (7) l'implant dentaire (1), dans lequel l'extrémité apicale du pilier prothétique de remplacement peut s'étendre vu en direction de l'axe d'implant dentaire (15) jusqu'au second niveau (5),
**caractérisé en ce**
**que** le pilier prothétique de remplacement est plus long que le pilier prothétique (2) vu dans le sens axial.

2. Système d'implant dentaire selon la revendication 1, **caractérisé en ce que** la section d'insertion (1a) se rétrécit en cône vers l'extrémité apicale de l'implant dentaire (1).

3. Système d'implant dentaire selon la revendication 1 ou 2, **caractérisé en ce que** l'implant dentaire (1) se compose d'un premier matériau qui présente un module d'élasticité entre 15 GPa et 75 GPa.

4. Système d'implant dentaire selon la revendication 3, **caractérisé en ce que** le pilier prothétique (2) se compose d'un second matériau qui présente un module d'élasticité supérieur à 100 GPa.

5. Système d'implant dentaire selon la revendication 4, **caractérisé en ce que** le pilier prothétique (2) se compose de titane cP.

6. Système d'implant dentaire selon la revendication 5, **caractérisé en ce que** le titane cP est nanostructuré.

7. Système d'implant dentaire selon l'une quelconque des revendications précédentes, **caractérisé en ce que** le pilier prothétique (2) est ou peut être fixé à l'implant dentaire (1) par une vis de fixation (3).

8. Système d'implant dentaire selon la revendication 7 et selon les revendications 3 et 4, **caractérisé en ce que** la vis de fixation (3) se compose du premier matériau ou du second matériau.

9. Système d'implant dentaire selon l'une quelconque des revendications précédentes, **caractérisé en ce que** l'implant dentaire (1) se compose au moins sur sa surface de titane ou d'un alliage de titane qui est nanostructuré.

10. Système d'implant dentaire selon l'une quelconque des revendications précédentes, **caractérisé en ce que** le pilier prothétique (2) se compose de titane ou d'un alliage de titane qui est nanostructuré.
